(19) Europäisches Patentamt

European Patent Office

Office européen des brevets

(11) Veröffentlichungsnummer: **0 550 527 B1**

(12) **EUROPÄISCHE PATENTSCHRIFT**

(45) Veröffentlichungstag der Patentschrift: **12.04.95**

(51) Int. Cl.⁶: **B62D 7/15**

(21) Anmeldenummer: **91916798.1**

(22) Anmeldetag: **26.09.91**

(86) Internationale Anmeldenummer:
**PCT/EP91/01838**

(87) Internationale Veröffentlichungsnummer:
**WO 92/05994 (16.04.92 92/09)**

(54) **VERFAHREN ZUR STEUERUNG DES LENKWINKELS.**

(30) Priorität: **29.09.90 DE 4030846**

(43) Veröffentlichungstag der Anmeldung:
**14.07.93 Patentblatt 93/28**

(45) Bekanntmachung des Hinweises auf die
Patenterteilung:
**12.04.95 Patentblatt 95/15**

(84) Benannte Vertragsstaaten:
**DE FR GB**

(56) Entgegenhaltungen:
**EP-A- 0 430 028**
**DE-A- 3 532 222**
**DE-A- 3 642 049**
**FR-A- 2 558 130**
**GB-A- 2 083 422**

**PATENT ABSTRACTS OF JAPAN vol. 14, no. 521 (P-1131)15. November 1990 & JP,A,2217 903 (MATSUSHITA) 30. August 1990**

(73) Patentinhaber: **ROBERT BOSCH GMBH**
**Postfach 30 02 20**
**D-70442 Stuttgart (DE)**

(72) Erfinder: **CAO, Chi-Thuan**
**Tubizer Str. 35**
**D-7015 Korntal-Münchingen 1 (DE)**
Erfinder: **BALLES, Winfried**
**Dürmerstr. 60**
**D-6967 Buchen-Hainstadt (DE)**
Erfinder: **HEESS, Gerhard**
**Stuttgarter Str. 90**
**D-7146 Tamm (DE)**
Erfinder: **ERBAN, Andreas**
**Berliner Strasse 24**
**D-7120 Bietigheim (DE)**
Erfinder: **ZIERHUT, Andreas**
**Drosselweg 12**
**D-7104 Obersulm-Sülzbach (DE)**

## Beschreibung

Stand der Technik

Ein Verfahren mit den Merkmalen des Oberbegriffs des Anspruchs 1 ist aus der DE-A1 37 34 477 bekannt.

Dort werden neben dem Lenkwinkel die Fahrzeuggeschwindigkeit, die Giergeschwindigkeit und die Quergeschwindigkeit bestimmt und aus den beiden letzten Größen wird eine Linearkombination als Regelgröße gebildet, die die Fahrzeugbewegung kennzeichnet. Mit Hilfe eines Modells, das die Fahrzeuggeschwindigkeit und den Lenkradwinkel verarbeitet, wird eine Referenzgröße erzeugt und aus beiden Größen wird dann die Differenz gebildet, die für die Lenkwinkeleinstellung benutzt wird.

Aus der DE-A-35 32 222 ist ein System zum Steuern der Lenkeigenschaften von mit Rädern versehenen Fahrzeugen bekannt, bei dem aus dem Lenkwinkel und der Fahrzeuggeschwindigkeit ein Sollwert für eine dynamische Fahrzeugvariable ermittelt wird. Die Differenz zwischen dem ermittelten Sollwert und dem erfaßten Istwert der dynamischen Variablen wird zur Bildung einer Stell- bzw. Reglergröße verwendet. Nachteilig bei diesem System ist die Erfassung der Fahrzeuggeschwindigkeit zur Ermittlung des Sollwertes.

Aus der GB-A-2,083,422 ist es bekannt, abhängig von dem erfaßten Lenkwinkel und der erfaßten Querbeschleunigung oder der erfaßten Giergeschwindigkeit die Lenkung der Hinterräder zu steuern. Eine Regelung einer Fahrzeugvariablen auf ein bestimmtes Wunschverhalten durch Ansteuerung der Lenkung findet bei diesem System nicht statt.

Vorteile der Erfindung

Die erfindungsgemäße Lösung hat die Vorteile, daß der Reglerentwurf einfach ist, daß der Regler im on-line-Betrieb betrieben werden kann, daß er robust gegenüber Parameteränderungen bzw. nichtmodellierter Fahrzeugdynamikanteile ist, daß er flexibel bezgl. der Eingriffsmöglichkeiten und bezgl. der Struktur der Regelstrecke ist, und daß er schnell reagiert und Störungen schnell ausregelt. Außerdem wird neben dem Lenkwinkel nur eine die Dynamik des Fahrzeugs kennzeichnende Größe (z.B. Giergeschwindigkeit um die Hochachse, oder Quergeschwindigkeit) benötigt.

Es ergeben sich prinzipiell drei Möglichkeiten des Lenkeingriffs:

- Reine Hinterachslenkung
- Reine Vorderachslenkung
- Kombination von Vorder- und Hinterachslenkung,

wobei der Eingriff aufgrund gemessener oder geschätzter Fahrzeug-Zustandsgrößen erfolgt. Das Ziel des Eingriffs besteht grundsätzlich darin, dem Fahrzeug ein gewünschtes Fahrverhalten aufzuprägen und somit die dynamischen Eigenschaften zu verbessern. Ein Referenzmodell dient dazu, das gewünschte Fahrverhalten vorzugeben.

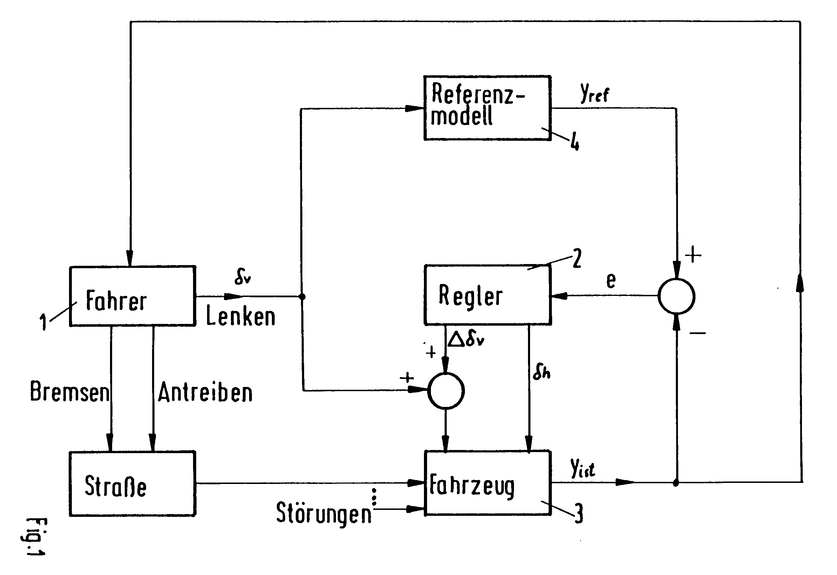

Fig. 1 veranschaulicht den prinzipiellen Aufbau eines geregelten Systems einer aktiven Lenkung.

Der Fahrer 1 gibt den Lenkwinkel $\delta_V$ vor. Dieser wirkt gegebenenfalls von einem Regler 2 geändert ($\Delta\delta_V$) auf das Fahrzeug 3. Es kann auch der Hinterachslenkwinkel $\delta_H$ oder es können beide Lenkwinkel $\delta_V$ und $\delta_H$ geändert werden. Der Fahrzeugblock 3 beinhaltet ein Fahrzeug der beschriebenen Art, das unter Zuhilfenahme der Meßgrößen ein Ausgangssignal Y erzeugt. Es gibt noch ein Referenzmodell 4, dem ebenfalls der Lenkwinkel $\delta_V$ zugeführt wird und das nach einer vorgegebenen Modellbeziehung ein Referenzsignal $Y_{ref}$ erzeugt. Die Differenz der beiden Signale ($Y_{ref} - Y_{ist}$) bewirkt über den Regler 2 die Änderung des bzw. der Lenkwinkel.

Die folgende Ableitung geht davon aus, daß der Hinterachslenkwinkel variiert wird.

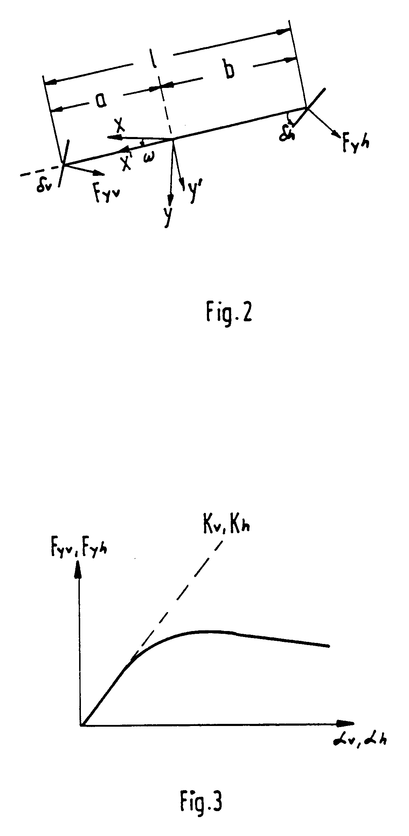

Als Basis für den Reglerentwurf, auf dem die Erfindung basiert, dient das übliche Einspurmodell als Fahrzeugmodell mit den Zustandgrößen Quergeschwindigkeit $V_Y$ und Giergeschwindigkeit $\omega$ (Nomenklatur siehe Anhang). Dieses Modell zeigt Fig. 2. Es gilt

$$\underline{X} = \underline{A}\,\underline{x} + \underline{B}\,\underline{u},$$

wobei gilt:

$$\underline{x} = \begin{bmatrix} V_Y \\ \omega \end{bmatrix} \qquad \underline{u} = \begin{bmatrix} \delta_V \\ \delta_H \end{bmatrix} \quad \text{und}$$

$$\underline{A} = \begin{bmatrix} \dfrac{-2K_V - 2K_H}{mV_x} & \dfrac{-2K_V a + 2K_H b - mV_x^2}{mV_x} \\[3ex] \dfrac{-2K_V a + 2K_H b}{\theta V_x} & \dfrac{-2K_V a^2 - 2K_H b^2}{\theta V_x} \end{bmatrix}$$

$$\underline{B} = \begin{bmatrix} \dfrac{2K_V}{m} & \dfrac{2K_H}{m} \\[3ex] \dfrac{2K_V a}{\theta} & \dfrac{-2K_H b}{\theta} \end{bmatrix}$$

Dem Fahrzeugmodell liegen folgende Vereinfachungen zugrunde:

1. Der Schräglaufwinkel wird als klein angenommen, weshalb gilt:

$$\alpha_V = \delta_V - \frac{V_Y + a\omega}{V_x} \qquad , \qquad \alpha_H = \delta_H - \frac{V_Y - b\omega}{V_x}$$

2. Der Zusammenhang zwischen Reifenquerkraft und Schräglaufwinkel wird als linear unterstellt.

$$F_{Y,VA} = 2K_V \alpha_V \qquad \text{(Vorderachse)}$$

$$F_{Y,HA} = 2K_H \alpha_H \qquad \text{(Hinterachse)}$$

3. Fahrzeuglängsgeschwindigkeit $V_X$ sei stuckweise konstant.

Man beachte die Geschwindigkeitsabhängigkeit der Elemente der Systemmatrix $\underline{A}$. Die Steifigkeiten $K_V$, $K_H$ können in der Regel nur im stabilen bzw. linearen Bereich näherungsweise angegeben werden (Fig. 3).

Infolge der Geschwindigkeitsabhängigkeit der Matrix $\underline{A}$ muß beim Stand der Technik der Reglerentwurf für unterschiedliche Geschwindigkeiten - z.B. in einem Raster von 5 km/h - durchgeführt werden. Abgesehen von dem entstehenden Entwurfsaufwand ist die Umschaltung der Regler (vom Bereich zum Bereich der Geschwindigkeit) bisweilen sehr abrupt. Außerdem ist die Robustheit des Reglers gegenüber unbekannten Parametern (wie nichtlineare Reifenkennlinien) nicht gewährleistet.

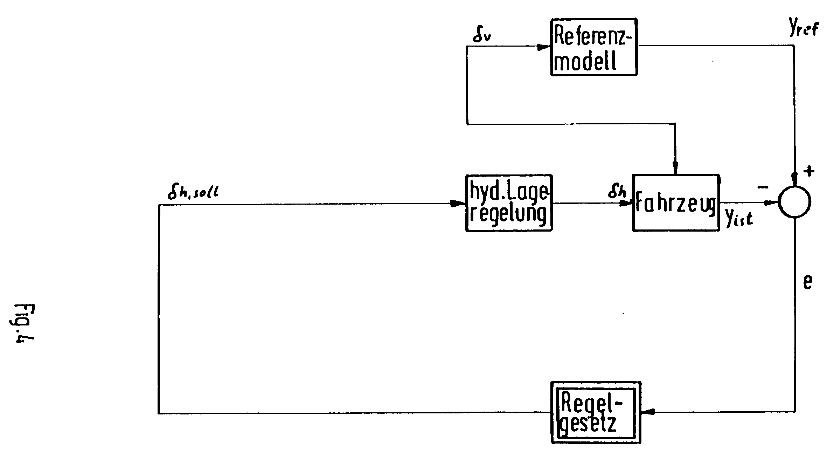

Fig. 4 gibt das prinzipielle Blockschaltbild der erfindungsgemäßen Modellfolgeregelung für die Hinterachslenkung wieder. Das Prinzip der Modellfolgeregelung ist folgendes: ein gewünschtes Fahrzeugverhalten, das durch ein Referenzmodell beschrieben wird, wird mit dem tatsächlichen Fahrzeugverhalten verglichen. Das resultierende Fehlersignal e dient dazu, einen Sollwert $\delta_{H,soll}$ für die Hinterachslenkung abzuleiten. Über ein hydraulisches Stellglied wird dann der notwendige Lenkwinkel $\delta_H$ erzeugt, der das Fehlersignal e möglichst klein hält.

Die Ableitung des Regelgesetzes zur Erzeugung des Sollwertes $\delta_{H,soll}$ für eine Hinterachslenkung oder $\delta_{V,soll}$ für eine Vorderachslenkung oder $\{\delta_{h,soll}, \delta_{v,soll}\}$ für eine kombinierte Hinter-/Vorderachslenkung wird ganz allgemein wie folgt durchgeführt:

1) Die Systemdynamik $\underline{A}\,X$ wird in zwei Anteile $\underline{F}(X,t)$ (bekannt), $\underline{H}(X,t)$ (unbekannt bzw. veränderlich) zerlegt und durch eine unbekannte Störung $\underline{D}(t)$ (z.B. Windstörung) für das Fahrzeugmodell ergänzt:

3

$$\underline{X}^{\cdot} = \underline{A}\,\underline{X} + \underline{B}\,\underline{U} = \underline{F}(X,t) + \underline{H}(X,t) + \underline{B}\,\underline{U} + \underline{D}(t)$$

Hierin sind

$\underline{U}$ = Stellgröße = Sollwert für die aktive Lenkung

$\underline{X}$ = Zustandsgröße = Regelgröße für die aktive Lenkung

2) Für das Referenzmodell wird folgendes angesetzt:

$$\underline{X}_m^{\cdot} = \underline{A}_m\underline{X}_m + \underline{B}_m\underline{U}_m$$

3) Als Fehlersignal erhält man

$$\underline{e} = \underline{X}_m - \underline{X}$$

4) Für die Modellfolgeregelung gilt: Gesucht wird $\underline{U}$, so daß

$$\underline{e} = \underline{X}_m - \underline{X} = \underline{A}_e\,\underline{e}$$

sich konvergiert.

5) Es ergibt sich als Lösung:

$$\underline{U} = (\underline{B}^T\underline{B})^{-1}\underline{B}^T \{-\underline{F}(X,t) - \underline{H}(X,t) - \underline{D}(t) + \underline{A}_m\underline{X} + \underline{B}_m\underline{U}_m - \underline{K}\,\underline{e}\},$$

wobei $\underline{K}$ so gewählt wird, daß

$$\underline{A}_E = \underline{A}_m + \underline{K}$$

nur Eigenwerte mit negativen Realanteilen besitzt.

6) Die Realisierung erfolgt durch folgenden Trick: Da $\underline{H}(X,t) + \underline{D}(t)$ nicht bekannt sind, werden sie aus bekannten Signalen approximiert:

$\underline{H}(X,t) + \underline{D}(t) \approx \underline{X}(t-L) - F(X,t-L) - \underline{B}(t-L) \cdot \underline{U}(t-L)$, wobei der Zeitpunkt (t-L) gegenüber dem Zeitpunkt t um L verschoben ist. Man erhält somit:

$$\underline{U}(t) = (\underline{B}^T\underline{B})^{-1}\underline{B}^T \cdot \{-\underline{F}(t) - X^{\cdot}(t-L) + \underline{F}(t-L) + \underline{B}(t-L)\underline{U}(t-L) + \underline{A}_m\underline{X} + \underline{B}_m\underline{U}_m - \underline{K}\,\underline{e}\}$$

Daraus kann man erkennen, daß

- die unbekannte Dynamik (wie Änderungen der Reifensteifigkeiten) und die nicht erfaßbaren Störungen (wie z.B. Seitenwind) im Reglerentwurf durch meßbare Größen berücksichtigt werden, was die Robustheit erhöht,
- das Regelgesetz einfach zu realisieren ist,
- die Reglerstruktur bezüglich der Eingriffsmöglichkeiten (Vorderachs-, Hinterachs- oder kombinierte Vorder- und Hinterachslenkung) sehr flexibel ist.

● <u>Realisierung für eine Hinterachslenkung</u>

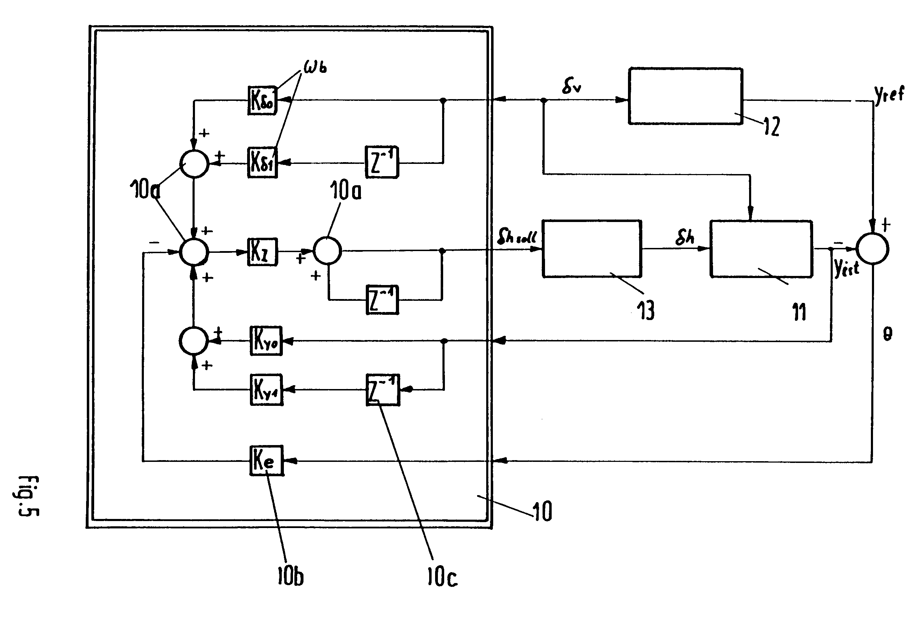

Für eine reine Hinterachslenkung kann das Regelgesetz wie in Fig. 5 mit Hilfe eines Mikrorechners realisiert werden. $Z^{-1}$ bedeutet eine Verschiebung eines Signals um einen Rechenschritt:

$$Z^{-1} \cdot Y_{ist}(K) = Y_{ist}(K-1)$$

$$Z^{-1} \cdot \delta_{H,soll}(K) = \delta_{H,soll}(K-1)$$

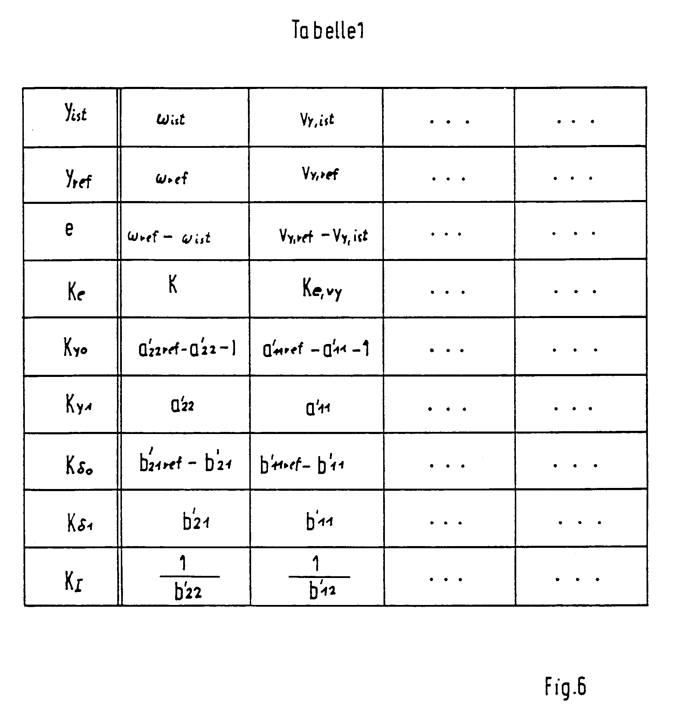

Je nach Wahl der Regelgröße $Y_{ist}$ ($\omega$, $V_Y$ oder andere Größe) können die Reglerparameter $\{K_E, K_{Y1}, K_{Yo}, K_I, K_{\delta 1}, K_{\delta o}\}$ der Tabelle der Fig. 6 entnommen werden.

Wird die $\omega$-Regelung und Hinterachslenkwinkeländerung gewählt, so gilt für den Block 11:

$(X = Y_{ist} = \omega_{ist} = \omega ; X_m = Y_{ref} = \omega_{ref} ; U = \delta_H)$ und für das Fahrzeugmodell

4

$$(\omega_{(t)} = a_{22} \, \omega_{(t)} + b_{21} \, \delta_V(t) + b_{22} \, \delta_H(t) + Z(t).$$

$Z(t)$ ist eine zufällige Störung wie z.B. Seitenwind.

Das zugehörige äquivalente zeitdiskrete Fahrzeugmodell lautet:

$$\omega(K+1) = a'_{22}\omega(K) + b'_{21}\delta_V(K) + b'_{22}\delta_H(K) + Z_\omega(K)$$

$$\text{wobei} \quad a'_{22} = \exp(a_{22} \cdot T_A) \qquad T_A: \text{Abtastzeit (Rechenzyklus)}$$

$$b'_{21} = \int_0^{T_A} \exp(a_{22} \cdot t) \, dt \cdot b_{21} = \frac{b_{21}}{a_{22}} \cdot [\exp(a_{22} \cdot T_A) - 1]$$

$$b'_{22} = \frac{b_{22}}{a_{22}} \cdot [\exp(a_{22}T_A) - 1] \text{ ist.}$$

$\omega_{(K)}$ und $\delta_V$ und $\delta_H$ werden gemessen, wobei $\omega_{(K)}$ auch geschätzt werden kann.

Das Referenzmodell (Block 12) in diskreter Form lautet:

$$\omega_{ref}(K+1) = a'_{22ref} \cdot \omega_{ref}(K) + b'_{21ref} \cdot \delta_V(K)$$

$$\text{wobei } a'_{22ref} = \exp(a_{22ref} \cdot T_A) \text{ und}$$

$$b'_{21ref} = \frac{b_{21ref}}{a_{22ref}} (a_{22ref} - 1) \text{ ist}$$

Für das Regelgesetz des Blocks 10 gilt:

$$\delta_{H_{soll}}(K) = \frac{1}{b_{22}} \{ -[a'_{22}\omega(K) + b'_{21}\delta_V(K)] - \omega(K)$$

$$+ [a'_{22}\omega(K-1) + b'_{21}\delta_V(K-1)] + b'_{22}\delta_{H_{soll}}(K-1)$$

$$+ [a'_{22ref}\omega_{ref}(K) + b'_{21ref}\delta_V(K)] - K_{E,\omega} \cdot e(K) \}$$

oder umgeformt

$$\delta_{H_{soll}}(K) = \underbrace{\frac{1}{b'_{22}}}_{K_I} \{ \underbrace{(a'_{22ref} - a'_{22} - 1) \cdot \omega(K)}_{K_{\omega o}} + \underbrace{a'_{22} \, \omega(K-1)}_{K_{\omega 1}}$$

$$+ \underbrace{(b'_{21ref} - b'_{21})}_{K_{\delta o}} \delta_V(K)$$

$$+ \underbrace{b'_{21}}_{K_{\delta 1}} \cdot \delta_V(K-1) - \underbrace{K_{e\omega}}_{K_E} \cdot e(K) \} + \delta_{H_{soll}}(K-1)$$

Im Block 10 der Fig. 5 ist eine Verschaltung entsprechend dieser Beziehung vorgenommen, wobei die Schaltung aus Addierern 10a, Multiplikatoren 10b und Speichern 10c für eine Taktzeit $T_A$ besteht. Über einen Block 13 wird dann der Lenkwinkel eingestellt.

Im Falle einer $V_Y$-Regelung lauten die Modellgleichungen:

$$\textbf{Fahrzeugmodell:} \qquad V_Y(K+1) = a'_{11} \, V_Y(K) + b'_{11} \delta_V(K)$$

$$+ b'_{12} \, \delta_H(K) + Z_{V_Y}(K)$$

$$\textbf{Referenzmodell:} \qquad V_{Y,ref}(K+1) = a_{11ref} \cdot V_{Y,ref}(K)$$

$$+ b'_{11ref} \, \delta_V(K)$$

Die Werte für die einzelnen Größen sind der Tabelle der Fig. 6 entnehmbar. Im Falle einer $a_y$-Regelung gilt die Ableitung in analoger Weise.

Das Regelgesetz ist für on-line Betrieb bei der Geschwindigkeitsabhängigkeit der Systemmatrix $\underline{A}$ besonders geeignet, weil diese Abhängigkeit explizit in $\underline{F}(X,t)$ auftaucht und deshalb immer im Regelgesetz mitberücksichtigt wird.

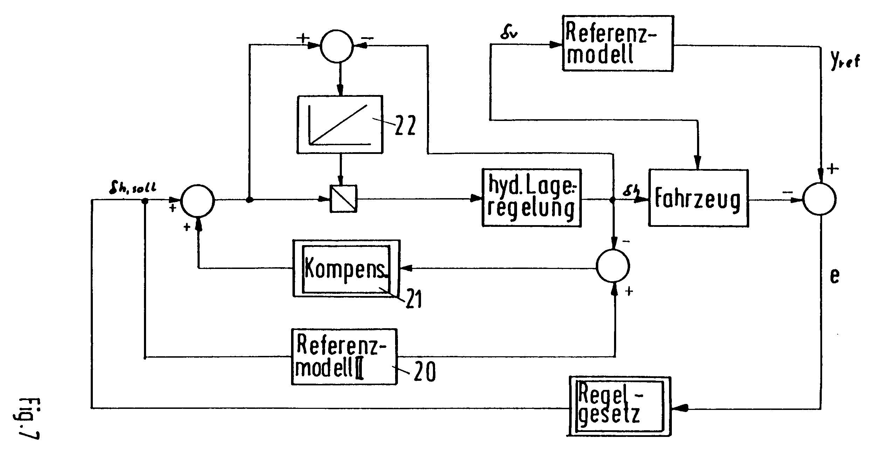

Der mit dem Regelgesetz gewonnene Sollwert $\delta_{H,soll}$ ist mit Hilfe einer hydraulischen Lageregelung (Block 13 der Fig. 5) möglichst genau einzuhalten. Da bekanntlich viele Nichtlinearitäten bzw. veränderliche Parameter bei dem hydraulischen Steller vorhanden sind, sind in Fig. 7 Verbesserungen vorgenommen. Darin sind zwei Anteile zu erwähnen:

Der dynamische Anteil des Sollsignals $\delta_{Hsoll}$ wird mit einem nach dem Modellfolgeprinzip konstruierten Kompensator verbessert. Dieser umfaßt ein Referenzmodell (Block 20) und einen Kompensator 21. Ähnlich wie bei dem erfindungsgemäßen Entwurf kann durch den Kompensator ein Korrektursignal erzeugt werden, das die Abweichung zwischen $\delta_{H,soll}$ und $\delta_H$ minimiert.

Für den stationären Anteil ist ein langsamer Integrator 22 vorgesehen, der den stationären Fehler ausregelt.

Gemäß einer Weiterbildung der Erfindung werden parallel zwei Fahrzeugvariable, z.B. Giergeschwindigkeit $\omega$ und die Querbeschleunigung $a_y$ und daraus zwei Sollgrößen für den Lenkwinkel $\delta_{H1}$ und $\delta_{H2}$ bestimmt. Unter Nutzung der Beziehung

$\delta_H = F \cdot \delta_{H1} + (1 - F) \cdot \delta_{H2}$ werden die beiden Sollwerte miteinander verknüpft. Mittels einer Fuzzy-Logik wird dann in Abhängigkeit von der Fahrzeuggeschwindigkeit $V_X$ und der Ableitung des Lenkwinkels $\delta_V$ die Größe F variiert.

6

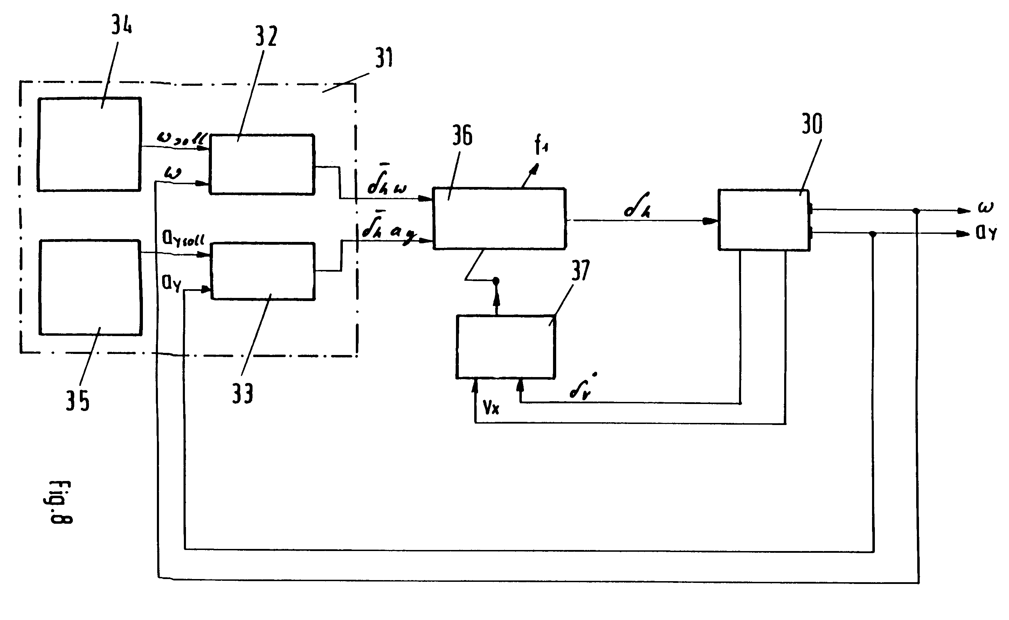

Das Konzept ist in Fig. 8 dargestellt.

Am Fahrzeug 30 stehen folgende Signale zur Verfügung:

$\omega$ : Giergeschwindigkeit

$a_Y$ : Querbeschleunigung im Schwerpunkt des Fahrzeugs

$V_X$ : Längsgeschwindigkeit

$\delta_V$ : Lenkwinkel

$\omega$ und $a_Y$ dienen dazu, um eine $\omega$-Regelung und eine $a_Y$-Regelung in Form einer Modellfolgeregelung für die Hinterachslenkung durchzuführen (Block 31). Die entsprechenden Regler 32 und 33 sind wie oben beschrieben ausgebildet, wobei die Sollwerte $\omega_{soll}$ und $a_{Ysoll}$ mit dem Referenzmodell I (Block 34) und dem Referenzmodell II (Block 35) erzeugt werden. Die gewonnenen Stellgrößen $\delta_{H,1}$ und $\delta_{H,2}$ werden im Block 36 mit den Faktoren $F_1$ und $(1-F_1)$ gewichtet, so daß eine resultierende Stellgröße $\delta_H$ für die Hinterachslenkung geliefert wird:

$$\delta_H = F_1 \cdot \delta_{H,\omega} + (1-F_1) \cdot \delta_{H,aY} \qquad \text{Gl. (1)}$$

Der Gewichtungsfaktor F wird erfindungsgemäß mit Hilfe einer "Fuzzy-Logik" bestimmt, wobei

$V_X$ und

$$\dot{\delta_V} \; (\dot{\delta_V} = \frac{d\delta_V}{dt} \;)$$

als Variable verwendet werden.

Zur Bestimmung von $F_1$ mit Hilfe einer "Fuzzy-Logik" sind grundsätzlich drei Schritte durchzuführen:

-   Definition von Zugehörigkeitsfunktionen für die Eingabegrößen

$$(V_X, \; \dot{\delta_V})$$

und Ausgangsgroßen ($F_1$),
-   Erstellung von Fuzzy-Regeln,
-   Anwendung von Fuzzy-Reasoning-Methoden.

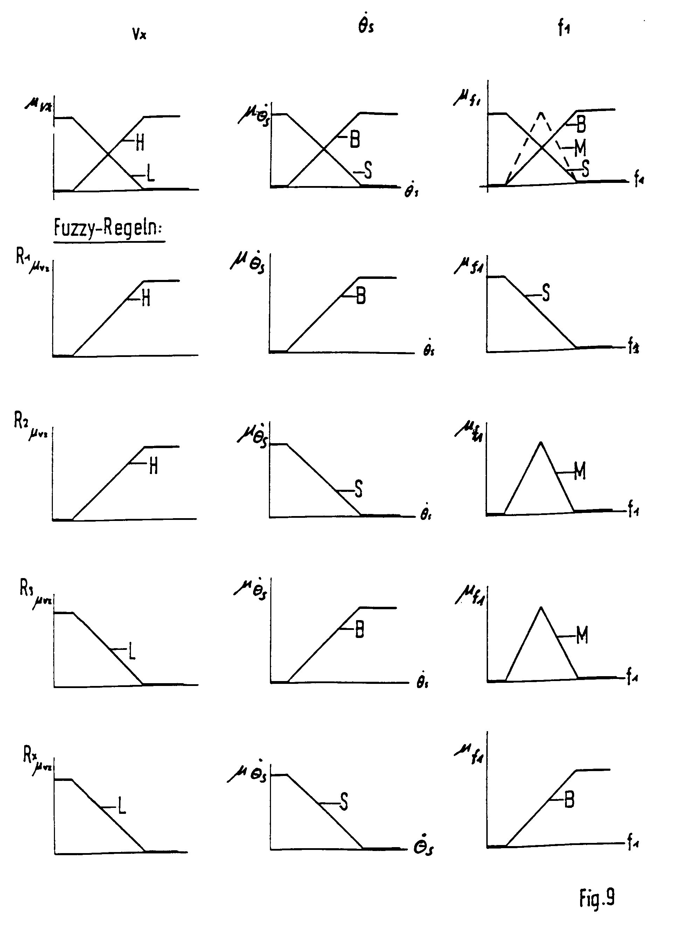

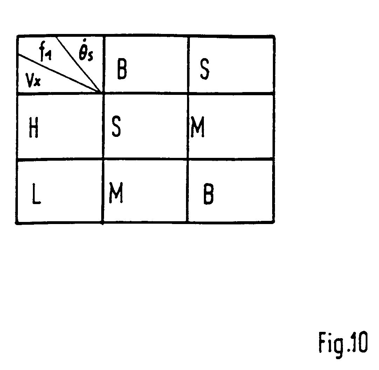

Beispielhaft sind diese Zugehörigkeitsfunktionen in Fig. 9 wiedergegeben. Hier wird die Anzahl der Fuzzy-Variablen (BIG = B, SMALL = S, HIGH = H, LOW = L, MEDIUM = M) einfachhalber auf das Mininum reduziert. Die Fuzzy-Regeln sind in Fig. 10 zusammengestellt. Die physikalische Große von $F_1$ erzielt man dann durch Anwendung von z.B. "Compositional rules of inference", die z.B. im Aufsatz Zadeh, L.: "Outline of a New Approach to the Analysis of Complex Systems and Decision Processes" in IEEE vol. SMC-3, no. 1, lq73, Pendelpalak. 28-44 veröffentlicht sind.

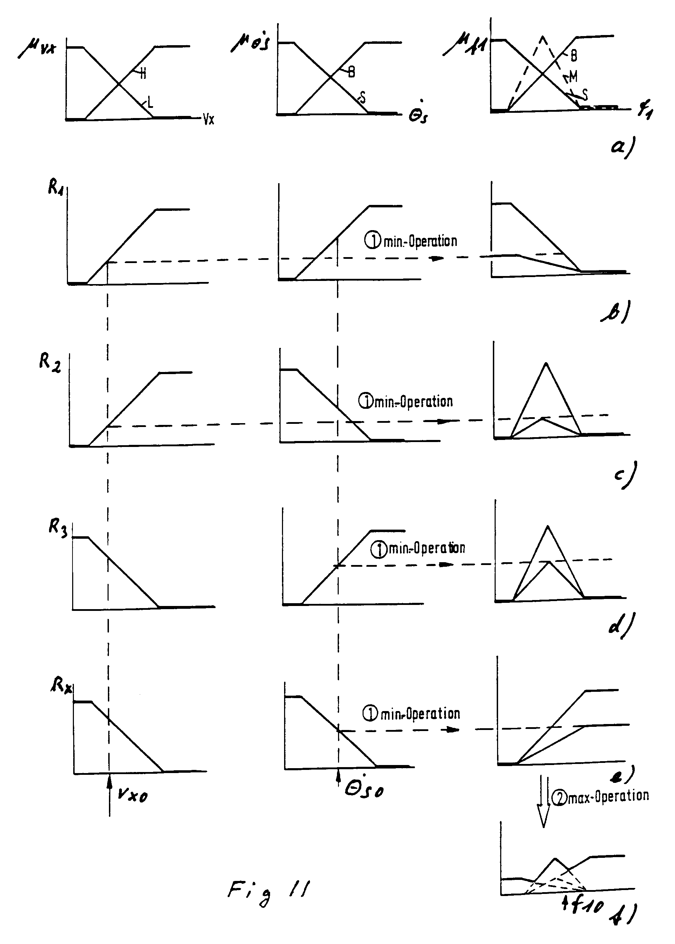

Die Ermittlung eines Verlaufs von F kann der Fig. 11 entnommen werden. Der Verlauf selbst ist in Fig. 10f dargestellt.

● Realisierung für eine Vorderachslenkung oder eine kombinierte Vorder- und Hinterachslenkung

für den Fall einer Vorderachslenkung oder einer kombinierten Vorder- und Hinterachslenkung müssen die entsprechenden Matrizen $\{\underline{B}, \underline{A}_m, \underline{B}_m, \underline{F}, \underline{X}, \underline{U}, \underline{U}_m, \underline{E}, \underline{K}\}$ eingesetzt werden. Ansonsten bleibt die Struktur des Regelgesetzes erhalten!

In Fig. 11 wird für den Betriebspunkt

$$\{v_{X0}, \; \dot{\theta}_{S,0}\}$$

die Gewichtung $f_{1,0}$ gesucht.

Nomenklatur

| | |
|---|---|
| a | Abstand vom Schwerpunkt zur Vorderachse |
| b | Abstand vom Schwerpunkt zur Hinterachse |
| e | a + b |
| $F_{YV}$ | Seitenkraft vorn (pro Rad) |
| $F_{YH}$ | Seitenkraft hinten (pro Rad) |
| $F_{YVA}$ | Seitenkraft Vorderachse |
| $F_{YHA}$ | Seitenkraft Hinterachse |
| $K_V$ | Reifensteifigkeit vorn (pro Rad) |
| $K_H$ | Reifensteifigkeit hinten (pro Rad) |
| m | Fahrzeugmasse |
| $V_X$ | Längsgeschwindigkeit |
| $V_Y$ | Quergeschwindigkeit |
| $\omega$ | Giergeschwindigkeit |
| $\alpha_V$ | Schräglaufwinkel vorn |
| $\alpha_H$ | Schräglaufwinkel hinten |
| $\beta$ | Schwimmwinkel |
| $\delta_V$ | vorderer Lenkwinkel |
| $\delta_H$ | hinterer Lenkwinkel |
| $\theta$ | Trägheitsmoment um die Hochachse |
| $\underline{B}^T$ | Transponierte von $\underline{B}$ |
| $\underline{B}^{-1}$ | Inverse von $\underline{B}$ |

**Patentansprüche**

1. Verfahren zur Steuerung des Hinterachslenkwinkels [$\delta_H$] eines oder mehrerer Räder eines Fahrzeugs im Sinne einer Regelung einer das Fahrzeugverhalten kennzeichnenden Fahrzeugvariablen [Y] auf eine Referenzvariable [$Y_{ref}$] zwecks Verbesserung der Querdynamik, bei dem
   - der Lenkwinkel [$\delta_V$] des Fahrzeugs und die Fahrzeugvariable [Y] gemessen werden,
   - mittels eines Referenzmodells unter Einbeziehung des Lenkwinkels die Referenzvariable [$Y_{ref}$] ermittelt wird,
   - zur Bildung einer Regelgröße [$\delta_{Hsoll}$] die Differenz [e(K)] zwischen der Referenzvariablen [$Y_{ref}$] und der gemessenen Fahrzeugvariablen [Y] gebildet wird,

   dadurch gekennzeichnet, daß
   - bei der Ermittlung der Referenzvariablen [$Y_{ref}$] mittels des Referenzmodells als einzige Meßgröße der Lenkwinkel [$\delta_V$] des Fahrzeugs verwendet wird, und
   - in einem Rechenschritt mittels des Referenzmodells die Referenzvariable [$Y_{ref(k+1)}$] für den folgenden Rechenschritt ermittelt wird.

2. Verfahren nach Anspruch 1, dadurch gekennzeichnet, daß mittels des Referenzmodells die Referenzvariable [$Y_{ref(k+1)}$] gemäß

$$Y_{ref(k+1)} = a_{Fref} {}^* Y_{ref}(k) + b_{Vref}\delta_V(k)$$

ermittelt wird, und daß, unter Anwendung des folgenden Regelgesetzes

$$\delta_{Hsoll}(k) = K_I {}^* [K_{Yo}{}^*Y(k) + K_{Y1}{}^*Y(k-1) + K_{\delta o}{}^*\delta_V(K) + K_{\delta 1}{}^*\delta_V(K-1) - K_E{}^*e(K)] + \delta_{Hsoll}(k-1)$$

die Stell- bzw. Reglergröße [$\delta_{Hsoll}(K)$] ermittelt wird, wobei gilt:

$$K_I = 1/b_H$$
$$K_{Yo} = (a_{Fref} - a_F -1)$$
$$K_{Y1} = a_F$$
$$K_{\delta o} = (b_{Vref} - b_V)$$
$$K_{\delta 1} = b_V$$

$K_E$ frei wählbar

$a_F$, $b_V$, $b_H$ sind Fahrzeugparameter

$a_{Fref}$, $b_{Vref}$ sind frei wählbare Paramter des Referenzmodells.

3. Verfahren nach Anspruch 1 oder 2, dadurch gekennzeichnet, daß die Fahrzeugvariable die Gierge-schwindigkeit [$\omega$] ist.

4. Verfahren nach Anspruch 1 oder 2, dadurch gekennzeichnet, daß die Fahrzeugvariable die Quergeschwindigkeit [$V_y$] ist.

5. Verfahren nach Anspruch 1 oder 2, dadurch gekennzeichnet, daß die Fahrzeugvariable die Querbeschleunigung [$a_y$] ist.

6. Verfahren nach einem der vorangehenden Ansprüche, dadurch gekennzeichnet, daß unter Nutzung zweier unterschiedlicher gemessener Fahrzeugvariablen zwei Stell- bzw. Reglergrößen [$\delta_{H1soll}$, $\delta_{H2soll}$] bestimmt werden, und daß diese nach der Beziehung $\delta_{Hsoll} = F^*\delta_{H1soll} + (1-F)^*\delta_{H2soll}$ miteinander verknüpft werden, und daß mit Hilfe einer Fuzzy-Logik die Funktion F in Abhängigkeit von der Fahrzeuggeschwindigkeit [$V_X$] und der Ableitung des Lenkwinkels [$\delta_V$] geändert wird.

## Claims

1. Method for controlling the rear-axle steering angle [$\delta_H$] of one or more wheels of a vehicle for the purpose of controlling a vehicle variable [Y] characterizing the vehicle behaviour to a reference variable [$Y_{ref}$] with the aim of improving the lateral dynamics, in which
   - the steering angle [$\delta_V$] of the vehicle and the vehicle variable [Y] are measured,
   - a reference model including the steering angle is used to determine the reference variable [$Y_{ref}$],
   - the difference [e(K)] between the reference variables [$Y_{ref}$] and the measured vehicle variables [Y] is formed in order to form a controlled variable [$\delta_{Hdes}$],
   
   characterized in that
   - when determining the reference variables [$Y_{ref}$] by means of the reference model, the steering angle [$\delta_V$] of the vehicle is used as the only measured variable, and
   - the reference model is used in a computing step to determine the reference variable [$Y_{ref(k+1)}$] for the following computing step.

2. Method according to Claim 1, characterized in that the reference model is used to determine the reference variable [$Y_{ref(k+1)}$] in accordance with

   $$Y_{ref(k+1)} = a_{Fref} {}^* Y_{ref}(k) + b_{Vref}\delta_V(k)$$

   and in that the following control rule

   $$\delta_{Hdes}(k) = K_I {}^* [K_{Yo} {}^* Y(k) + K_{Y1} {}^* Y(k-1) + K_{\delta o} {}^* \delta_V(K) + K_{\delta 1} {}^* \delta_V(K-1) - K_E {}^* e(K)] + \delta_{Hdes}(k-1)$$

   is used to determine the manipulated variable or controlled variable [$\delta_{Hdes}(K)$], it being the case that:

   $K_I = 1/b_H$
   $K_{Yo} = (a_{Fref} - a_F -1)$
   $K_{Y1} = a_F$
   $K_{\delta o} = (b_{Vref} - b_V)$
   $K_{\delta 1} = b_V$

   $K_E$ can be freely selected
   $a_F$, $b_V$, $b_H$ are vehicle parameters, and
   $a_{Fref}$, $b_{Vref}$ are parameters of the reference model which can be freely selected.

3. Method according to Claim 1 or 2, characterized in that the vehicle variable is the yaw velocity [$\omega$].

4. Method according to Claim 1 or 2, characterized in that the vehicle variable is the lateral velocity [$V_y$].

5. Method according to Claim 1 or 2, characterized in that the vehicle variable is the lateral acceleration [$a_y$].

6. Method according to one of the preceding claims, characterized in that two different measured vehicle variables are used to determine two manipulated variables or controlled variables [$\delta_{H1des}$, $\delta_{H2des}$], and in that the latter are combined with one another in accordance with the relationship $\delta_{Hdes} = F^*\delta_{H1des} + (1-F)^*\delta_{H2des}$, and in that a fuzzy logic system is used to change the function F depending on the vehicle velocity [$V_X$] and the derivative of the steering angle [$\delta_V$].

**Revendications**

1. Procédé pour commander l'angle de braquage de l'essieu arrière [$\delta_H$] d'une ou plusieurs roues d'un véhicule dans le sens d'une régulation de l'une des variables [Y] caractérisant le comportement du véhicule, suivant une variable de référence [$Y_{ref}$] pour améliorer la dynamique transversale, selon lequel:
   - on mesure l'angle de braquage [$\delta_V$] du véhicule et la variable [Y] du véhicule,
   - on détermine la variable de référence [$Y_{ref}$] à l'aide d'un modèle de référence en tenant compte de l'angle de braquage,
   - on forme la différence [e(K)] entre les variables de référence ($Y_{ref}$) et les variables [Y] mesurées du véhicule pour former une grandeur de régulation [$\delta_{Hcons}$],
   caractérisé en ce que,
   - pour déterminer la variable de référence [$Y_{ref}$] à l'aide du modèle de référence comme unique grandeur de mesure, on utilise l'angle de braquage [$\delta_V$] du véhicule et,
   - dans une étape de calcul, à l'aide du modèle de référence, on détermine la variable de référence [$Y_{ref(k+1)}$] pour l'étape de calcul suivante.

2. Procédé selon la revendication 1, caractérisé en ce qu'à l'aide du modèle de référence on détermine la variable de référence [$Y_{ref(k+1)}$] selon la formule suivante :

$$Y_{ref(k+1)} = a_{Fref} {}^* Y_{ref}(k) + b_{Vref}\delta_V(k)$$

et en utilisant la loi de régulation suivante :

$$\delta_{Hcons}(k) = K_I {}^* [K_{Yo}^*Y(k) + K_{Y1}^*Y(k-1) + K_{\delta o}^*\delta_V(K) + K_{\delta 1}^*\delta_V(K-1) - K_E^*e(K)] + \delta_{Hcons}(k-1),$$

on détermine la grandeur de réglage ou de régulation [$\delta_{Hcons}(K)$] avec :

$K_I = 1/b_H$
$K_{Yo} = {}_{(}a_{Fref} - a_F - 1_{)}$
$K_{Y1} = A_F$
$K_{\delta o} = (b_{Vref} - b_V)$
$K_{\delta 1} = b_V$

$K_E$ : choisi librement
$a_F$, $b_V$, $b_H$ sont des paramètres du véhicule
$a_{Fref}$, $b_{Vref}$ sont des paramètres choisis librement sur le modèle de référence.

3. Procédé selon la revendication 1 ou 2, caractérisé en ce que la variable du véhicule est la vitesse de lacet [$\omega$].

4. Procédé selon la revendication 1 ou 2, caractérisé en ce que la variable du véhicule est la vitesse transversale [$V_y$].

5. Procédé selon la revendication 1 ou 2, caractérisé en ce que la variable du véhicule est l'accélération transversale [$a_y$].

6. Procédé selon l'une des revendications précédentes, caractérisé en ce qu'en utilisant deux variables différentes, mesurées du véhicule, on définit deux grandeurs de réglage ou de régulation [$\delta_{H1cons}$,

$\delta_{H21cons}$] et on les combine suivant la relation $\delta_{Hcons} = F^*\delta_{H1cons} + (1-F)^*\delta_{H2cons}$ et à l'aide d'une logique floue on modifie la fonction F suivant la vitesse du véhicule [$V_X$] et la dérivée de l'angle de braquage [$\delta_V$].

Fig.1

Fig. 2

Fig. 3

Referenz-modell

Fahrzeug

hyd.Lage-regelung

Regel-gesetz

$y_{ref}$

$y_{ist}$

$e$

$\delta_v$

$\delta_h$

$\delta_{h,soll}$

+

−

Fig.4

Fig.5

EP 0 550 527 B1

Tabelle 1

| $y_{ist}$ | $\omega_{ist}$ | $V_{y,ist}$ | . . . | . . . |
|---|---|---|---|---|
| $y_{ref}$ | $\omega_{ref}$ | $V_{y,ref}$ | . . . | . . . |
| $e$ | $\omega_{ref} - \omega_{ist}$ | $V_{y,ref} - V_{y,ist}$ | . . . | . . . |
| $K_e$ | $K$ | $K_{e,vy}$ | . . . | . . . |
| $K_{yo}$ | $a'_{22ref} - a'_{22} - 1$ | $a'_{11ref} - a'_{11} - 1$ | . . . | . . . |
| $K_{y1}$ | $a'_{22}$ | $a'_{11}$ | . . . | . . . |
| $K_{\delta o}$ | $b'_{21ref} - b'_{21}$ | $b'_{11ref} - b'_{11}$ | . . . | . . . |
| $K_{\delta 1}$ | $b'_{21}$ | $b'_{11}$ | . . . | . . . |
| $K_I$ | $\dfrac{1}{b'_{22}}$ | $\dfrac{1}{b'_{12}}$ | . . . | . . . |

Fig.6

16

Fig.7

Fig. 8

EP 0 550 527 B1

Fig.9

Fig.10

EP 0 550 527 B1

Fig 11